# EUROPÄISCHE PATENTANMELDUNG

(11) **EP 4 663 003 A1**
(43) Veröffentlichungstag der Anmeldung: **17.12.2025**
(21) Anmeldenummer: 24181037.3
(22) Anmeldetag: 10.06.2024
(51) Int. Cl.: A01F 25/16, A01F 25/18

(54) **NUTZFAHRZEUG ZUR VERDICHTUNG EINES ERNTEGUTES**

(71) Anmelder: Deere & Company, Moline, IL 61265 (US)
(72) Erfinder: Brocke, Stefan, Mannheim (DE); Fritz, Norbert, Mannheim (DE)
(74) Vertreter: Dehnhardt, Florian Christopher

(57) **Zusammenfassung**

Die Erfindung betrifft ein Nutzfahrzeug (16) zur Verdichtung eines gelagerten Erntegutes (12) durch Überfahren einer Oberfläche (14) des Erntegutes (12). Das Nutzfahrzeug (16) ist mit einem Radarsensor (34) zur Ermittlung einer Dichte (Di_e) des gelagerten Erntegutes (12) ausgestattet. Der Radarsensor (34) sendet Radarsignale (36) in Richtung des Erntegutes (12) und empfängt an dem Erntegut (12) reflektierte Radarsignale (38). Der Radarsensor (34) ist an einer Trägervorrichtung (42) angeordnet, welche an dem Nutzfahrzeug (16) beweglich gelagert ist und zwischen einer Transportposition (pos_tr) und einer relativ zur Transportposition abgesenkten Arbeitsposition (pos_ar) einstellbar ist.

## Beschreibung

Die Erfindung betrifft ein Nutzfahrzeug gemäß dem Oberbegriff des unabhängigen Anspruchs 1.

Aus DE 10 2020 110 297 A1 ist es bekannt, während einer Verdichtung von Silage in einem Silo die Dichte der Silage zu erfassen. Hierzu wird ein mit Radarwellen arbeitender Sensor eingesetzt, der an der Vorderseite eines Verdichtungsfahrzeugs angebracht sein kann.

Aufgabe der vorliegenden Erfindung ist es, eine radarbasierte Ermittlung einer Silage-Dichte weiter zu verbessern.

Diese Aufgabe wird durch ein Nutzfahrzeug mit den Merkmalen des Patentanspruchs 1 gelöst.

Weitere vorteilhafte Ausgestaltungen der Erfindung gehen aus den Unteransprüchen hervor.

Gemäß Anspruch 1 wird ein Nutzfahrzeug zur Verdichtung eines gelagerten Erntegutes durch Überfahren einer Oberfläche des Erntegutes bzw. Biomaterials vorgeschlagen. Das Nutzfahrzeug ist mit einem Radarsensor zur Ermittlung einer Dichte des gelagerten Erntegutes ausgestattet. Zum Zwecke der Dichteermittlung sendet der Radarsensor Radarsignale in Richtung des Erntegutes und empfängt Radarsignale, welche an dem Erntegut reflektiert werden. Der Radarsensor ist an einer Trägervorrichtung angeordnet und ist insbesondere von der Trägervorrichtung getragen. Dabei ist die Trägervorrichtung an dem Nutzfahrzeug (z.B. an dessen Fahrgestell oder Chassis) beweglich gelagert derart, dass sie zwischen einer Transportposition für den Radarsensor und einer relativ zur Transportposition abgesenkten Arbeitsposition für den Radarsensor einstellbar ist.

Die am Nutzfahrzeug beweglich gelagerte Trägervorrichtung ermöglicht grundsätzlich unterschiedliche Positionen des Radarsensors bezüglich des Nutzfahrzeugs, insbesondere die Transportposition und die Arbeitsposition. Hierdurch kann der Radarsensor unterschiedlichen Betriebsmoden angepasst werden. Beispielsweise kann die relativ zur Arbeitsposition angehobene Transportposition dazu genutzt werden, den Radarsensor während einer (Transport-)Fahrt außerhalb des Lagerortes des Erntegutes ohne zusätzliche Maßnahmen verbessert vor Schmutz und etwaigen Beschädigungen zu schützen. Die abgesenkte Arbeitsposition hingegen kann während einer Verdichtungsüberfahrt des Nutzfahrzeugs über das Erntegut vorteilhaft dazu genutzt werden, den Abstand zwischen dem Radarsensor und dem Erntegut gering zu halten und hierdurch mit geringer Radarenergie eine präzise Dichteermittlung zu unterstützen.

Vorzugsweise kann zwischen der Transportposition und der Arbeitsposition auch mindestens eine weitere Position der Trägervorrichtung eingestellt werden, welche für die Positionierung und Funktionalität des Radarsensors vorteilhaft ist. Entlang einer Bewegungsrichtung der Trägervorrichtung kann auch über die Transportposition oder Arbeitsposition hinaus mindestens eine weitere Position der Trägervorrichtung einstellbar sein.

In einer bevorzugten Ausführungsform ist die Trägervorrichtung mittels eines Aktuators bewegungssteuerbar. Hierbei ist der Aktuator insbesondere Bestandteil der Trägervorrichtung. Der Aktuator kann durch seine Bewegungen unterschiedliche Positionen der Trägervorrichtung erzielen.

Der Aktuator ist vorzugsweise als ein längenveränderbarer Hebelarm ausgebildet, welcher an dem Nutzfahrzeug (z.B. Chassis, Fahrgestell) gelagert, insbesondere beweglich gelagert ist. Eine geeignete Ansteuerung (z.B. hydraulisch, pneumatisch oder elektrisch) kann auf technisch einfache Weise die gewünschte Beweglichkeit der Trägervorrichtung realisieren.

In einer weiteren vorteilhaften Ausführungsform ist die Transportposition und/oder die Arbeitsposition in Abhängigkeit von Umgebungsdaten einstellbar. Die Umgebungsdaten repräsentieren mindestens ein Merkmal einer aktuellen Umgebung des Nutzfahrzeugs. Die Umgebungsdaten werden vorzugsweise durch eine geeignete Sensorik (z.B. Umfeldüberwachung) generiert. Mit Hilfe ausgewerteter Umgebungsdaten kann in Echtzeit eine automatische Positionsanpassung der Trägervorrichtung und ebenso automatisch die jeweils vorteilhafteste Positionierung des Radarsensors erfolgen. Beispielsweise kann mittels der Umgebungsdaten das Einfahren des Nutzfahrzeugs in ein Silo detektiert werden, so dass der Radarsensor automatisch in die Arbeitsposition und in einen Arbeitsmodus zum Starten der Dichteermittlung überführt werden kann. Analog kann der Radarsensor automatisch in ihre Transportposition überführt werden, wenn das Nutzfahrzeug beispielsweise aus dem Silo hinausfährt.

Weiter vorzugsweise ist die Arbeitsposition der Trägervorrichtung bzw. der Radarsensor in unterschiedlichen vertikalen Arbeitshöhen einstellbar. Hierdurch kann während der Dichteermittlung der Abstand zwischen dem Radarsensor und der Oberfläche des Erntegutes individuell variiert werden, beispielsweise abhängig von der Beschaffenheit der Erntegut-Oberfläche oder von der mit dem Radarsensor verwendeten spezifischen Technologie. Der Abstand zwischen dem Radarsensor und der Erntegut-Oberfläche kann Null sein, was einem Kontakt zwischen dem Radarsensor und der Erntegut-Oberfläche entspricht. Alternativ ist beispielsweise ein konstanter Abstand > 0 zwischen dem Radarsensor und der Erntegut-Oberfläche während einer Verdichtungsüberfahrt eingestellt.

In einer weiteren alternativen Ausführungsform wird auf eine Einstellung von Arbeitshöhen verzichtet. Hier kann die Trägervorrichtung, insbesondere deren Aktuator, in einen Schwebemodus versetzt werden, so dass der Radarsensor frei schwebend an der Erntegut-Oberfläche entlanggleitet.

Vorteilhaft ist die Arbeitshöhe in Abhängigkeit von Profildaten einstellbar, welche ein Oberflächenprofil des gelagerten Erntegutes repräsentieren. Eine Verarbeitung der Profildaten kann eine Automatik (z.B. mittels einer Steuereinheit) zur individuellen Veränderung der Arbeitshöhe unterstützen.

Vorzugsweise werden die Profildaten mittels eines am Nutzfahrzeug angeordneten Umfeldsensors generiert. Hierdurch wird eine Ansteuerung bzw. Aktuierung der Trägervorrichtung in Echtzeit abhängig von aktuellen Umgebungsbedingungen unterstützt.

In weiteren bevorzugten Ausführungsformen ist die Transportposition und/oder die Arbeitsposition und/oder die Arbeitshöhe mittels einer die Trägervorrichtung ansteuernden Steuereinheit einstellbar. Die Steuereinheit kann beispielsweise die vorgenannten Umgebungsdaten und/oder Profildaten und/oder andere Daten auswerten und in Echtzeit die Trägervorrichtung zur Realisierung der am besten geeigneten Position oder entsprechend der ausgewerteten Daten vorbestimmten Position ansteuern.

In einer weiteren vorteilhaften Ausführungsform ist der Radarsensor in einem Sensorgehäuse angeordnet, welches mit der Trägervorrichtung beweglich verbunden ist. Insbesondere ist das Sensorgehäuse mit der Trägervorrichtung schwenkbeweglich verbunden mit einer parallel zu einer Radachse des Nutzfahrzeugs verlaufenden Schwenkachse. Hierdurch ist das Sensorgehäuse bzw. der Radarsensor auch nickbeweglich, was eine gute Bewegungsführung des Sensorgehäuses im Falle eines Kontakts mit der Oberfläche des Erntegutes unterstützt. Das Sensorgehäuse unterstützt definierte Positionseinstellungen des Radarsensors und nimmt vorzugsweise zusätzliche Komponenten auf, wie etwa notwendige Elektronik und weitere Sensoren. Beispielsweise kann der Radarsensor Bestandteil einer das Sensorgehäuse aufweisenden Sensorvorrichtung sein, welche neben dem Radarsensor optional eine Einheit zur Temperierung der Sensorvorrichtung enthält. Mindestens ein weiterer Sensor (z.B. Temperatur, Optik) kann ebenfalls in der Sensorvorrichtung enthalten sein.

Weiter vorzugsweise ist die Trägervorrichtung mit einer Kontakteinheit für einen mechanischen Gleitkontakt mit der Oberfläche des Erntegutes verbunden. Diese Konstruktion kann die Trägervorrichtung und der Radarsensor mit geringem technischen Aufwand vor unerwünschten mechanischen Verschleißerscheinungen während einer Verdichtungsüberfahrt des Nutzfahrzeugs schützen.

Vorteilhaft ist die Kontakteinheit mit der Trägervorrichtung verbunden, indem diese mit dem Sensorgehäuse verbunden und daran befestigt, insbesondere unbeweglich befestigt, ist. Diese Anordnung ermöglicht einen physikalisch wirksamen und effizienten Einsatz der Kontakteinheit.

In einer weiteren vorteilhaften Ausführungsform weist die Kontakteinheit einen kufenartigen Querschnitt auf, welcher vorzugsweise in Längsrichtung des Nutzfahrzeugs verläuft. Der kufenartige Querschnitt trägt dazu bei, etwaige Funktionsstörungen des Radarsensors aufgrund eines ungünstigen Oberflächenverlaufs des Erntegutes zu vermeiden.

Insbesondere ist ein kufenartiger Querschnitt an zwei in Längsrichtung gegenüberliegenden Freienden der Kontakteinheit vorgesehen, so dass der mechanische Schutz und/oder physikalische Gleitkontakt sowohl bei Vorwärtsfahrt als auch bei Rückwärtsfahrt des Nutzfahrzeugs während der Verdichtungsarbeit bzw. Verdichtungsüberfahrt gleichermaßen gegeben ist.

Vorzugsweise ist eine am Nutzfahrzeug (z.B. beweglich und insbesondere gelenkig) gelagerte Entlastungseinrichtung vorgesehen, welche die Trägervorrichtung oder zumindest mit ihr verbundene Komponenten (z.B. Radarsensor, Sensorgehäuse, Kontakteinheit) hinsichtlich deren Gewichtskraft entlastet. Dabei ist die Trägervorrichtung und/oder der Radarsensor und/oder das Sensorgehäuse auf geeignete Weise mit der Entlastungseinrichtung verbunden, z.B. beweglich und insbesondere gelenkig. Hierdurch werden die Trägervorrichtung oder zumindest die mit ihr verbundenen Komponenten hinsichtlich ihrer Gewichtskraft derart entlastet, dass sich diese Komponenten beim Überfahren der Oberfläche des Erntegutes nicht in das Erntegut eingraben können. Bereits verdichtete Materialschichten des Erntegutes bleiben somit vor etwaigen Beeinträchtigungen ihres bereits erreichten Verdichtungszustands zuverlässig geschützt. Je nach physikalischer Einstellung der Entlastungseinrichtung kann eine quantitativ unterschiedliche Entlastung, z.B. eine Entlastung von 90% der wirkenden Gewichtskraft, erreicht werden.

Vorteilhaft wird zur Gewichtskraftentlastung der an dem Nutzfahrzeug gelagerte und die Trägervorrichtung bewegungssteuernde Aktuator verwendet. Die gewünschte Kraftentlastung kann beispielsweise bei einem als Hydraulikzylinder ausgebildeten Aktuator mittels einer geeigneten Druckregelung und/oder in Kombination mit einem geeignet angeschlossenen Druckregelventil oder Akkumulator realisiert werden.

Alternativ oder zusätzlich kann die Entlastungseinrichtung für die Gewichtskraftentlastung mindestens ein Federelement und/oder mindestens eine Kette aufweisen. Beispielsweise ist ein Federelement, insbesondere eine Zugfeder, an dem Nutzfahrzeug gelagert und mit einem Kettenende der Kette verbunden, während das andere Kettenende dieser Kette mit der Trägervorrichtung und/oder dem Radarsensor und/oder dem Sensorgehäuse auf geeignete Weise (z.B. beweglich) verbunden ist. Die Entlastungseinrichtung kann auch eine Mehrzahl einer solchen Feder-Ketten-Kinematik aufweisen.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine blockschaltbildartige Darstellung des erfindungsgemäßen Systems, und
- Fig. 2: eine blockschaltbildartige Darstellung von Einzelheiten des erfindungsgemäßen Verfahrens, und
- Fig. 3: eine schematische Darstellung der Generierung von Referenzdaten, und
- Fig. 4a: eine schematische Draufsicht eines Nutzfahrzeugs und eines zu verdichtenden Erntegutes, und
- Fig. 4b: eine Seitenansicht des Nutzfahrzeugs und des zu verdichtenden Erntegutes gemäß Pfeilrichtung IV-B in Fig. 4a, und
- Fig. 5: eine schematische Seitenansicht einer Sensorvorrichtung mit einem Radarsensor, und
- Fig. 6: eine vergrößerte schematische Ansicht des Details VI in Fig. 1, und
- Fig. 7a: eine Seitenansicht eines Nutzfahrzeugs mit der Sensorvorrichtung gemäß Fig. 6 in einer Arbeitsposition, und
- Fig. 7b: die Seitenansicht des Nutzfahrzeugs gemäß Fig. 7a mit der Sensorvorrichtung in einer Transportposition.

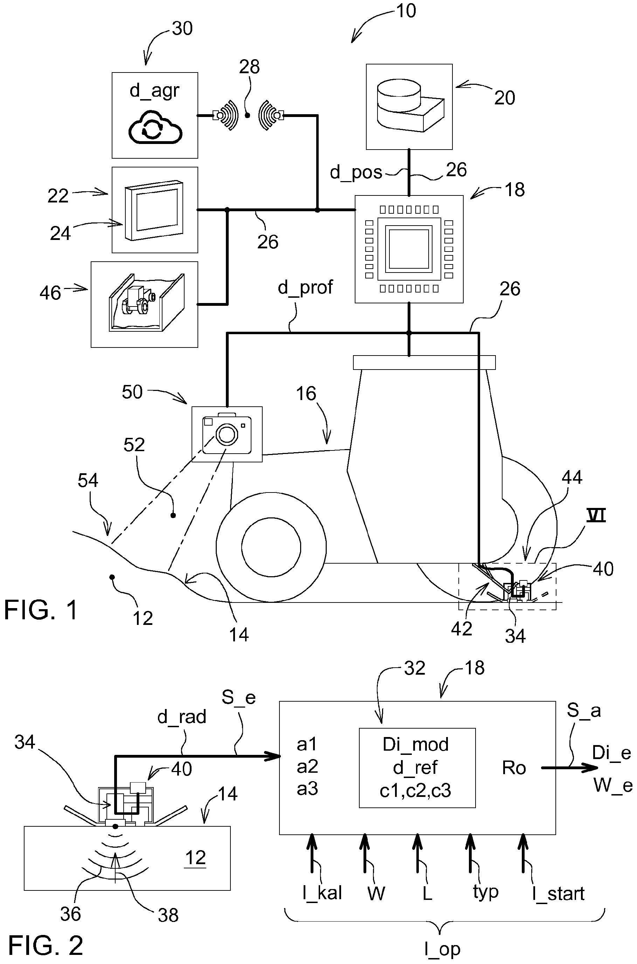

Fig. 1 zeigt ein System 10 zur Ermittlung einer Dichte Di_e eines gelagerten Erntegutes 12, dessen Oberfläche 14 von einem landwirtschaftlichen Nutzfahrzeug 16, hier in Form eines Traktors, zur Verdichtung überfahren wird. Die ermittelte Dichte Di_e wird von Ausgangssignalen S_a einer Steuereinheit 18 ausgegeben. Die Ausgangssignale können optional außerdem einen mittels der Steuereinheit 18 ermittelten Feuchtegehalt W_e des Erntegutes 12 und weitere interessierende Daten im Zusammenhang mit der Verdichtungstätigkeit enthalten.

Die Steuereinheit 18 ist vorzugsweise in dem Nutzfahrzeug 16 integriert. Das Nutzfahrzeug 16 ist beispielsweise von einem Fahrzeugführer gesteuert oder als autonomes Fahrzeug automatisiert aktiv.

Das Nutzfahrzeug 16 und weitere Komponenten des Systems 10 sind über eine geeignete Datenverbindung mit der Steuereinheit 18 verbunden, um eine aktuelle Dichte Di_e zu ermitteln und einer Arbeitsperson (z.B. dem Fahrzeugführer) insbesondere visualisiert mitzuteilen.

Ein Positionserfassungssystem 20 (z.B. GPS) und eine Benutzerschnittstelle 22 (z.B. Tastatur und Anzeigeeinheit 24 zur Eingabe und/oder Visualisierung von Daten) sind im oder am Nutzfahrzeug 16 angeordnet und jeweils über eine drahtgebundene Datenverbindung 26 mit der Steuereinheit 18 verbunden. Über eine drahtlose Datenverbindung 28 ist die Steuereinheit 18 mit einer Datenzentrale 30 verbunden. Letztere kann basierend auf einer Cloud-Technologie aufgebaut sein. Sie kann als zentraler Datenspeicher und/oder Datenverarbeitungszentrum für verschiedene agrarbezogene Aktivitäten eines Landwirts bzw. einer Farm dienen. Die Datenzentrale 30 enthält u.a. verschiedene agrarbezogene Daten d_agr. Diese Daten d_agr können zumindest teilweise beispielsweise während der Durchführung des Verfahrens zur Ermittlung der Dichte Di_e entstanden und in der Datenzentrale 30 abgespeichert sein und/oder von der Datenzentrale 30 bereits vor der und somit auch während der Verfahrensdurchführung bereitgestellt sein. Beispielsweise sendet die Steuereinheit 18 verschiedene Ausgangssignale S_a, insbesondere die aktuelle Dichte Di_e, an die Anzeigeeinheit 24 für eine Visualisierung der Dichte Di_e in Echtzeit und überträgt diese Ausgangssignale S_a gleichzeitig über die Datenverbindung 28 an die Datenzentrale 30.

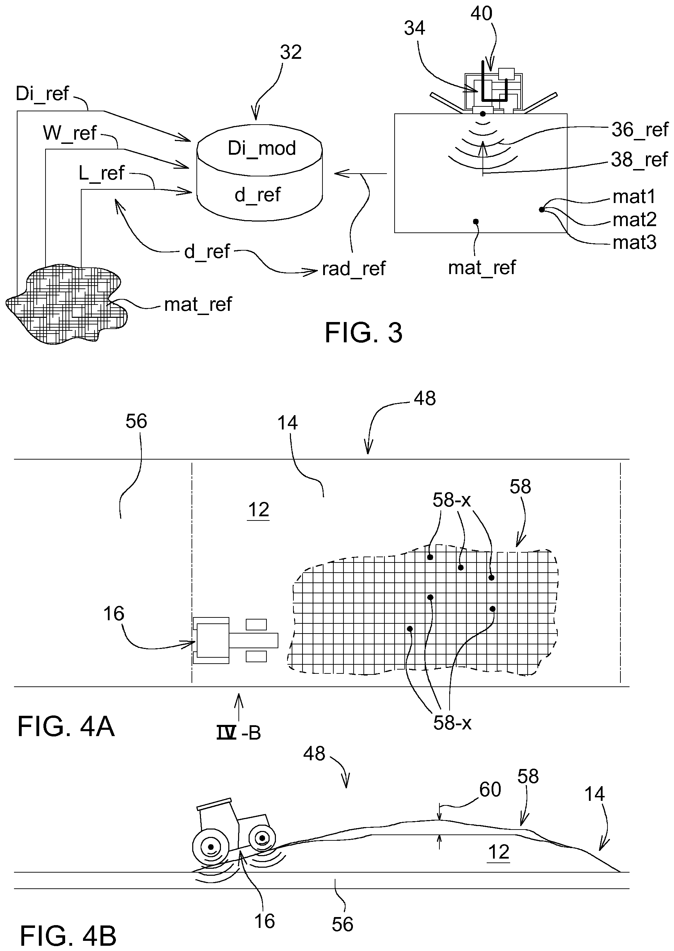

In der Steuereinheit 18 ist eine Datenbank 32 mit Referenzdaten d_ref und einem Dichtemodell Di_mod enthalten (Fig. 2). Alternativ können die Referenzdaten d_ref und/oder das Dichtemodell Di_mod bzw. kann die Datenbank 32 außerhalb der Steuereinheit 18, insbesondere in der Datenzentrale 30, vorhanden sein, so dass die Steuereinheit 18 jederzeit über die Datenverbindung 26 oder 28 auf die Referenzdaten d_ref und/oder das Dichtemodell Di_mod zugreifen kann. Die Referenzdaten d_ref und das Dichtemodell Di_mod werden anhand von Fig. 3 näher erläutert.

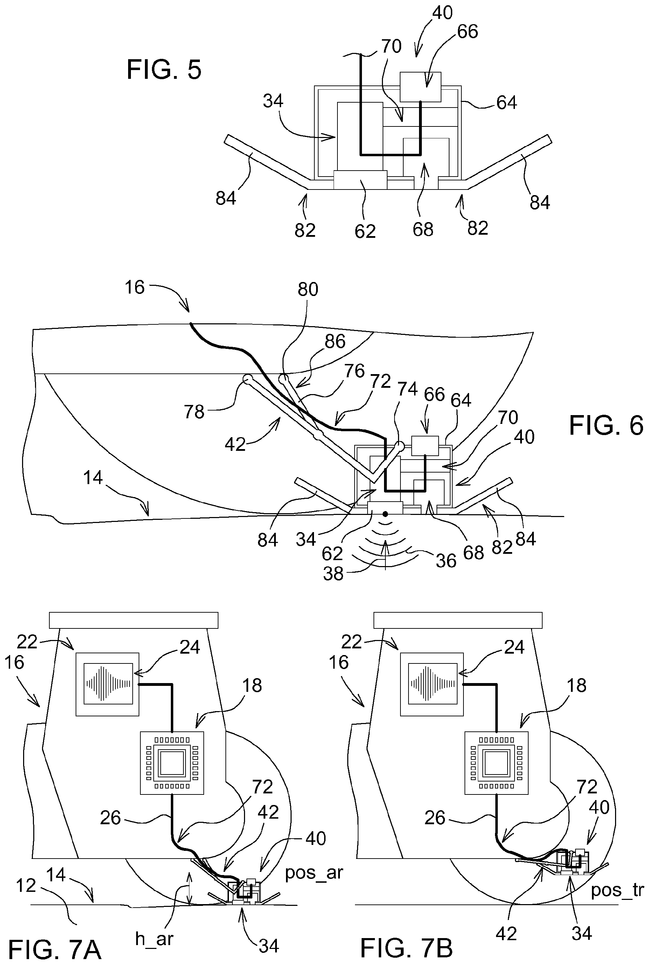

Unter Anwendung einer Radartechnologie ermittelt die Steuereinheit 18 eine aktuelle Dichte Di_e des Erntegutes 12. Zu diesem Zweck ist am Nutzfahrzeug 16 ein Radarsensor 34 angeordnet, welche während der Verdichtungstätigkeit Radarsignale 36 in Richtung des Erntegutes 12 sendet und an dem Erntegut 12 reflektierte Radarsignale 38 empfängt. Der Radarsensor 34 ist Bestandteil einer Sensorvorrichtung 40, welche an einer Trägervorrichtung 42 angeordnet ist. Die Trägervorrichtung 42 wiederum ist an dem Nutzfahrzeug 16 beweglich gelagert. Die Sensorvorrichtung 40 und die Trägervorrichtung 42 können gemeinsam als ein Sensormodul 44 bezeichnet werden, welches anhand der Fig. 6 bis Fig. 7b näher erläutert ist.

Die Steuereinheit 18 kann, insbesondere über die Datenverbindung 26, auf Umgebungsdaten 46 des Lagerortes des Erntegutes 12 zugreifen. Der Lagerort ist insbesondere ein Silo 48 (Fig. 4a). Die Umgebungsdaten 46 werden vorzugsweise mittels einer geeigneten Sensorik generiert und in einer Datenbank gespeichert. Sie repräsentieren insbesondere in Echtzeit aktuelle Umgebungsbedingungen und -merkmale des Nutzfahrzeugs 16. Mit Hilfe der Umgebungsdaten 46 kann die Steuereinheit 18 das Verfahren zur Dichteermittlung steuern, insbesondere das Verfahren zur Dichteermittlung automatisch starten, wenn das Nutzfahrzeug 16 eine entsprechende Position am Lagerort erreicht hat.

Darüber hinaus kann an dem Nutzfahrzeug 16 ein Umfeldsensor 50 angeordnet sein, welcher innerhalb eines Sichtfeldes 52 auf der Basis eines erfassten Oberflächenprofils 54 des Erntegutes 12 Profildaten d_prof generiert. Vorzugsweise unterstützt der Umfeldsensor 50 auch eine Generierung der Umgebungsdaten 46. Die Steuereinheit 18 kann in Abhängigkeit der Profildaten d_prof die Trägervorrichtung 42 ansteuern, wie anhand der Fig. 7a und Fig. 7b näher erläutert.

Fig. 2 zeigt die Steuereinheit 18, welche als Eingangssignale S_e u.a. Radardaten d_rad empfängt. Die Radardaten d_rad repräsentieren zumindest die an dem Erntegut 12 reflektierten Radarsignale 38 und ggf. auch weitere Informationen. Anhand der Radardaten d_rad können die reflektierten Radarsignale 38 mit dem bereitgestellten Dichtemodell Di_mod verarbeitet werden. In Abhängigkeit von dem Verarbeitungsergebnis kann die aktuelle Dichte Di_e ermittelt bzw. abgeleitet werden. Optional kann auch ein Feuchtegehalt W_e des Erntegutes 12 ermittelt werden.

Die Dichte Di_e kann durch die Steuereinheit 18 während einer Verdichtungsüberfahrt des Nutzfahrzeugs 16 über das Erntegut 12 permanent aktuell bzw. in Echtzeit ermittelt werden. Die Steuereinheit 18 kann aber auch während eines Stillstandes des Nutzfahrzeugs 16, insbesondere während seines Aufenthalts am Lagerort bzw. im Silo 48, eine aktuelle Dichte Di_e ermitteln.

Die Steuereinheit 18 kann an mindestens einem zusätzlichen Signaleingang weitere Informationen I_op oder Größen empfangen. Dies sind beispielsweise:
- eine Kalibrierinformation I_kal (z.B. physikalische Konstante oder Materialparameter bezüglich des Erntegutes 12),
- ein Feuchtegehalt W des Erntegutes 12,
- eine Schnittlänge L des Erntegutes 12,
- ein Typ typ des Erntegutes 12 (z.B. Art der Pflanze, Vegetationszustand der Pflanze),
- eine den Beginn der Verdichtung repräsentierende Information I_start (z.B. Startsignal für die Ermittlung der Dichte Di_e, Startzeitpunkt der Dichteermittlung, von den Umgebungsdaten 46 abgeleitetes Signal).

Die vorgenannten Informationen I_op oder Größen können von anderen Datenquellen abgerufen werden oder manuell über die Benutzerschnittstelle 22 eingegeben werden oder sie können durch Messungen (z.B. mittels eines Sensors) zur Verfügung gestellt werden. Mit diesen zusätzlichen Informationen I_op kann eine noch präzisere Ermittlung der Dichte Di_e unterstützt werden. Es müssen nicht zwangsläufig sämtliche der vorgenannten Informationen bzw. Größen für die Steuereinheit 18 zur Verfügung stehen. Beispielsweise handelt es sich bei dem Feuchtegehalt W und bei der das Erntegut 12 charakterisierenden Information typ um Informationen, welche jeweils nur optional von der Steuereinheit 18 empfangen werden. Weiterhin optional können auch andere, hier nicht genannte Informationen bzw. Größen von der Steuereinheit 18 empfangen werden.

Die Informationen I_op werden zumindest teilweise vorzugsweise während der Verdichtungsüberfahrt des Nutzfahrzeugs 16, d.h. während der Verdichtungsarbeit, generiert.

In einer weiteren Funktion kann die Steuereinheit 18 dazu verwendet werden, in Abhängigkeit von der ermittelten aktuellen Dichte Di_e das Nutzfahrzeug 16 zu steuern, um dessen Arbeitseinsatz zu unterstützen. So können relevante Fahrzeug-Parameter wie etwa der Reifendruck, die Fahrzeuggeschwindigkeit oder die Lenkung mittels der Steuereinheit 18 gesteuert werden. Ebenso kann die Steuereinheit 18 in Abhängigkeit von der ermittelten aktuellen Dichte Di_e eine notwendige Restverdichtung berechnen. Auch eine materialspezifische (z.B. abhängig von dem Typ und der Feuchtigkeit des Erntegutes) Soll-Dichte kann von der Steuereinheit 18 ermittelt werden.

Fig. 3 zeigt beispielhaft eine Generierung von Referenzdaten d_ref vor Beginn der Verdichtung des Erntegutes 12 im Anwendungsfall. Hierbei wird in experimentellen Versuchen für ein Referenz-Material mat_ref des Erntegutes 12 beispielsweise bei einer definierten Referenz-Dichte Di_ref, einem definierten Referenz-Feuchtegehalt W_ref und einer definierten Referenz-Schnittlänge L_ref eine Referenz-Radarinformation rad_ref auf Basis reflektierter Referenz-Radarsignale 38_ref erfasst. Die Referenz-Radarinformation rad_ref repräsentiert ein Reflexionsverhalten des Referenz-Materials mat_ref und ggf. auch weitere physikalische Merkmale. Dabei kann die Referenz-Radarinformation rad_ref unterschiedliche Verdichtungszustände (von 0% bis 100%) berücksichtigen.

Bei der Generierung der Referenzdaten d_ref wird vorzugsweise eine Sensorvorrichtung 40 verwendet, welche zumindest hinsichtlich des Radarsensors 34 mit dem während der Verdichtungsüberfahrt des Nutzfahrzeugs 16 eingesetzten Radarsensor 34 identisch ist. Dabei generieren ausgesendete Referenz-Radarsignale 36_ref im Referenz-Material mat_ref reflektierte Referenz-Radarsignale 38_ref.

Die Referenzdaten d_ref werden bezüglich desselben Referenz-Materials vorzugsweise für unterschiedliche Zustände hinsichtlich der Referenz-Dichte Di_ref und/oder des Referenz-Feuchtegehalts W_ref und/oder der Referenz-Schnittlänge L_ref generiert. Die Referenzdaten können auch für unterschiedliche Referenz-Materialien mat_ref, insbesondere Materialien unterschiedlicher Typen des Erntegutes 12, generiert werden. Unterschiedliche Referenz-Materialien sind in Fig. 3 beispielhaft durch die Materialien mat1, mat2, mat3 angedeutet.

Die Daten bezüglich der Referenz-Dichte Di_ref können auch Daten enthalten, welche eine Dehnungscharakteristik (insbesondere Materialverhalten in unverdichtetem Zustand und nach einer definierten Verdichtung) repräsentieren.

In Abhängigkeit von den oder zumindest von einigen der Referenzdaten d_ref wird ein Dichtemodell Di_mod abgeleitet bzw. generiert und kann dann für das Verfahren zur Ermittlung der Dichte Di_e bereitgestellt werden. Die Referenzdaten d_ref werden nach Art von Kalibrierdaten generiert und das Dichtemodell kann als ein definiertes Ergebnis eines Kalibrierverfahrens betrachtet werden. Insbesondere enthält oder repräsentiert das Dichtemodell Di_mod einen mathematischen bzw. stochastischen Zusammenhang zwischen der oder den Referenz-Radarinformation(en) rad_ref und mindestens einer der vorgenannten Größen (Referenz-Dichte Di_ref, Referenz-Feuchtegehalt W_ref, Referenz-Schnittlänge L_ref). Dieser Zusammenhang ist derart, dass während der Verdichtungsarbeit im Anwendungsfall eine präzise mathematische Verarbeitung der Radardaten d_rad mit dem Dichtemodell Di_mod unterstützt wird.

Beispielsweise enthält das Dichtemodell Di_mod einen Algorithmus oder eine Formel, wonach eine Modelldichte Ro als Ro = c1 ·· a1 + c2 . a2 + c3 . a3
definiert ist. Dabei sind a1, a2, a3 Platzhalter für Amplitudenwerte der reflektierten Radarsignale 38 und c1, c2, c3 sind als Koeffizienten von den Referenzdaten d_ref abgeleitet. Von den reflektierten Radarsignalen 38 wird ein Amplitudenspektrum berechnet, deren Amplitudenwerte a1, a2, a3 bei vorbestimmten charakteristischen Frequenzen ermittelt werden. Somit können definierte Amplituden des Amplitudenspektrums als Eingangsgrößen für das Dichtemodell Di_mod verwendet werden. In dem Beispiel wird die zu ermittelnde Dichte Di_e von der Modelldichte Ro abgeleitet, insbesondere mit der Modelldichte Ro gleichgesetzt.

Fig. 4a und Fig. 4b zeigen das Silo 48, auf dessen Bodenplatte 56 das Erntegut 12 gelagert ist. In einem Oberflächenbereich 58 soll Material 60 des Erntegutes 12 verdichtet werden. Mit Hilfe von Positionsdaten d_pos des Nutzfahrzeugs 16 kann der Oberflächenbereich 58 in mehrere Oberflächenabschnitte 58-x eingeteilt werden, zu denen jeweils eine Dichte Di_e ermittelt wird. Die positionsabhängige Dichte Di_e kann dann mittels der Steuereinheit 18 an die Benutzerschnittstelle 22 gesendet werden. Auf diese Weise kann an der Anzeigeeinheit 24 die zu überfahrende Oberfläche 14, insbesondere der Oberflächenbereich 58, mit abschnittsweise zugeordneten aktuellen Dichten Di_e in Echtzeit visualisiert werden. Dabei können unterschiedliche Dichten Di_e durch unterschiedliche Farben dargestellt werden. Beispielsweise können unverdichtete Oberflächenabschnitte 58-x durch eine rote Farbe, vollständig verdichtete Oberflächenabschnitte 58-x durch eine grüne Farbe und Oberflächenabschnitte 58-x mit anderen Verdichtungszuständen bzw. -graden durch entsprechende Farbabstufungen dargestellt werden.

Fig. 5 zeigt die Sensorvorrichtung 40 mit mehreren Komponenten. Der bereits erwähnte Radarsensor 34 ist hier als eine Radarantenne mit einer Sende- und Empfangsfunktion ausgebildet. Für eine effiziente Aussendung der Radarsignale 36 in Richtung des Erntegutes 12 weist der Radarsensor 34 einen Signaldurchlass 62 auf, welcher ein Sensorgehäuse 64 durchsetzt. Die Sensorvorrichtung 40 enthält abgesehen von dem Radarsensor 34 optional eine Sensoreinheit 66 zur Temperierung der Sensorvorrichtung 40 und eine weitere Sensorik 68, z.B. zur Temperaturmessung oder optischen Detektion im Bereich des Erntegutes 12. Außerdem ist im Sensorgehäuse 64 eine Elektronik 70 für den Radarsensor 34 und die optionalen Sensoren 66, 68 enthalten.

Wie in Fig. 6 erkennbar, ist die Elektronik 70 an einen Kabelsatz 72 für die Energieversorgung der Sensorvorrichtung 40 und für eine Datenübertragung angeschlossen. Vorzugsweise enthält der Kabelsatz 72 ein Versorgungskabel für eine Energieversorgung der Sensorvorrichtung 40 und ein Datenkabel für die Datenübertragung. Zumindest das Datenkabel des Kabelsatzes 72 ist an die Sensorvorrichtung 40 und die Steuereinheit 18 angeschlossen. Somit können mittels des Kabelsatzes 72 beispielsweise die reflektierten Radarsignale 38 in Form der Radardaten d_rad an die Steuereinheit 18 gesendet werden.

Das Sensorgehäuse 64 ist an der Trägervorrichtung 42 beweglich gelagert, insbesondere mittels einer quer zur Längsrichtung des Nutzfahrzeugs 16 verlaufenden Schwenkachse 74 an der Trägervorrichtung 42 gelagert. Die Trägervorrichtung 42 ist als eine mehrarmige Hebelkonstruktion ausgebildet, welche mittels eines Aktuators 76 in Form eines längenveränderbaren Hebelarmes, z.B. ein Hydraulikzylinder, bewegungssteuerbar ist. Hierdurch bewirkt der Aktuator 76 eine Einstellung unterschiedlicher Positionen der Sensorvorrichtung 40 relativ zur Oberfläche 14 des Erntegutes 12. Sowohl der Aktuator 76 als auch die Trägervorrichtung 42 sind über die Lagerstellen 78, 80 an dem Nutzfahrzeug 16 beweglich gelagert.

Die Trägervorrichtung 42 ist mit einer Kontakteinheit 82 für einen mechanischen Gleitkontakt mit der Oberfläche 14 des Erntegutes 12 verbunden. Dabei ist die Kontakteinheit 82 an einer Bodenseite des Sensorgehäuses 64 befestigt und unterstützt die Sensorvorrichtung 40 bzw. den Radarsensor 34 in ihrer Funktionalität auch bei einem ungünstigen Verlauf der Oberfläche 14 des Erntegutes 12. Die Kontakteinheit 82 weist an beiden Längsenden jeweils eine Kufe 84 auf, so dass die Funktion der Kontakteinheit 82 sowohl bei Vorwärts- als auch Rückwärtsfahrt des Nutzfahrzeugs 10 gegeben ist.

Bei den einstellbaren Positionen der Trägervorrichtung 42 handelt es sich insbesondere um eine Arbeitsposition pos_ar für den Radarsensor 34 (Fig. 7a) und um eine gegenüber der Arbeitsposition pos_ar angehobene Transportposition pos_tr für den Radarsensor 34 (Fig. 7b). Die Transportposition pos_tr ist vorteilhaft dann eingestellt, wenn keine Dichteermittlung stattfindet, insbesondere wenn sich das Nutzfahrzeug 16 außerhalb des Silos 48 befindet. Die demgegenüber abgesenkte Arbeitsposition pos_ar wird vorteilhaft dann eingestellt, wenn das Nutzfahrzeug 16 in das Silo 48 eingefahren ist und insbesondere auf dem Erntegut 12 steht. Zur Einstellung der beiden Positionen pos_tr, pos_ar wird die Trägervorrichtung 42 und/oder der Aktuator 76 von der Steuereinheit 18 in Abhängigkeit der Umgebungsdaten 46 angesteuert.

Die Arbeitsposition pos_ar kann hinsichtlich ihrer vertikalen Arbeitshöhe h_ar unterschiedlich eingestellt werden. Hierdurch kann zwischen der Sensorvorrichtung 40 bzw. der Kontakteinheit 82 und der Oberfläche 14 beispielsweise ein unmittelbarer Kontakt (Abstand = 0) oder ein konstanter Abstand > 0 hergestellt werden. Zu diesem Zweck wird die Trägervorrichtung 42 und/oder der Aktuator 76 von der Steuereinheit 18 in Abhängigkeit der Profildaten d_prof angesteuert. Alternativ kann die Trägervorrichtung 42 und/oder der Aktuator 76 in einen Schwebemodus versetzt werden, so dass die Sensorvorrichtung 40 bzw. die Kontakteinheit 82 frei schwebend an der Oberfläche 14 entlanggleitet. Hierbei kann vorteilhaft das Eigengewicht verschiedener Komponenten, insbesondere der Sensorvorrichtung 40, derart abgefangen werden, dass sich diese Komponenten nicht in bereits verdichtetes Material des Erntegutes 12 eingraben. Somit bleibt dieses Material zuverlässig kompaktiert. Für diese Gewichtskraftentlastung ist eine am Nutzfahrzeug 16 gelagerte Entlastungseinrichtung 86 vorgesehen, welche beispielsweise den Aktuator 76 enthält. Alternativ oder zusätzlich kann die Entlastungseinrichtung 86 andere, hier nicht dargestellte Bauteile zur Kraftentlastung enthalten wie beispielsweise mindestens ein Federelement (insbesondere Zugfeder) und mindestens eine Kette. Diese Bauteile sind vorzugsweise miteinander gekoppelt einerseits am Nutzfahrzeug 16 gelagert und andererseits mit der Sensorvorrichtung 40 verbunden.

## Patentansprüche

1. Nutzfahrzeug (16) zur Verdichtung eines gelagerten Erntegutes (12) durch Überfahren einer Oberfläche (14) des Erntegutes (12), mit einem Radarsensor (34) zur Ermittlung einer Dichte (Di_e) des gelagerten Erntegutes (12) mittels Senden von Radarsignalen (36) in Richtung des Erntegutes (12) und Empfangen von an dem Erntegut (12) reflektierten Radarsignalen (38),
**dadurch gekennzeichnet, dass**
der Radarsensor (34) an einer Trägervorrichtung (42) angeordnet ist, welche an dem Nutzfahrzeug (16) beweglich gelagert ist und zwischen einer Transportposition (pos_tr) für den Radarsensor (34) und einer relativ zur Transportposition (pos_tr) abgesenkten Arbeitsposition (pos_ar) für den Radarsensor (34) einstellbar ist.

2. Nutzfahrzeug nach Anspruch 1, **dadurch gekennzeichnet, dass** die Trägervorrichtung (42) mittels eines Aktuators (76) bewegungssteuerbar ist.

3. Nutzfahrzeug nach Anspruch 2, **dadurch gekennzeichnet, dass** der Aktuator (76) als ein längenveränderbarer Hebelarm ausgebildet ist, welcher an dem Nutzfahrzeug (16) gelagert ist.

4. Nutzfahrzeug nach einem der vorhergehenden Ansprüche,
**dadurch gekennzeichnet, dass** die Transportposition (pos_tr) und/oder die Arbeitsposition (pos_ar) in Abhängigkeit von Umgebungsdaten (46) einstellbar ist, welche mindestens ein Merkmal einer aktuellen Umgebung (48) des Nutzfahrzeugs (16) repräsentieren.

5. Nutzfahrzeug nach einem der vorhergehenden Ansprüche, **dadurch gekennzeichnet, dass** eine vertikale Arbeitshöhe (h_ar) der Arbeitsposition (pos_ar) unterschiedlich einstellbar ist.

6. Nutzfahrzeug nach Anspruch 5, **dadurch gekennzeichnet, dass** die Arbeitshöhe (h_ar) in Abhängigkeit von Profildaten (d_prof) einstellbar ist, welche ein Oberflächenprofil (54) des gelagerten Erntegutes (12) repräsentieren.

7. Nutzfahrzeug nach Anspruch 6, **dadurch gekennzeichnet, dass** das Nutzfahrzeug (16) einen Umfeldsensor (50) für eine Generierung der Profildaten (d_prof) aufweist.

8. Nutzfahrzeug nach einem der vorhergehenden Ansprüche, **dadurch gekennzeichnet, dass** die Transportposition (pos_tr) und/oder die Arbeitsposition (pos_ar) und/oder die Arbeitshöhe (h_ar) mittels einer die Trägervorrichtung (42) ansteuernden Steuereinheit (18) einstellbar ist.

9. Nutzfahrzeug nach einem der vorhergehenden Ansprüche, **dadurch gekennzeichnet, dass** der Radarsensor (34) in einem Sensorgehäuse (64) angeordnet ist, welches mit der Trägervorrichtung (42) beweglich verbunden ist.

10. Nutzfahrzeug nach einem der vorhergehenden Ansprüche, **dadurch gekennzeichnet, dass** die Trägervorrichtung (42) mit einer Kontakteinheit (82) für einen Gleitkontakt mit der Oberfläche (14) des Erntegutes (12) verbunden ist.

11. Nutzfahrzeug nach Anspruch 10, **dadurch gekennzeichnet, dass** die Kontakteinheit (82) an dem Sensorgehäuse (64) befestigt ist.

12. Nutzfahrzeug nach Anspruch 10 oder 11, **dadurch gekennzeichnet, dass** die Kontakteinheit (82) einen kufenartigen Querschnitt aufweist.

13. Nutzfahrzeug nach einem der vorhergehenden Ansprüche, **dadurch gekennzeichnet, dass** an dem Nutzfahrzeug (16) eine Entlastungseinrichtung (86) gelagert ist zur Entlastung des Radarsensors (34) von seiner Gewichtskraft.

14. Nutzfahrzeug nach Anspruch 13, **dadurch gekennzeichnet, dass** der Aktuator (76) Bestandteil der Entlastungseinrichtung (86) ist.

15. Nutzfahrzeug nach Anspruch 13 oder 14, **dadurch gekennzeichnet, dass** die Entlastungseinrichtung (86) zur Gewichtskraftentlastung mindestens ein Federelement und/oder mindestens eine Kette aufweist.
